# EUROPEAN PATENT SPECIFICATION

(11) **EP 2 704 307 B1**
(45) Date of publication and mention of the grant of the patent: **13.10.2021**
(21) Application number: 11864511.8
(22) Date of filing: 28.04.2011
(51) Int. Cl.: H02P 6/16

(54) **BRUSHLESS MOTOR CONTROL DEVICE AND BRUSHLESS MOTOR CONTROL METHOD**
VORRICHTUNG ZUR STEUERUNG EINES BÜRSTENLOSEN MOTORS UND VERFAHREN ZUR STEUERUNG EINES BÜRSTENLOSEN MOTORS
DISPOSITIF ET PROCÉDÉ DE COMMANDE DE MOTEUR SANS BALAI

(43) Date of publication of application: 05.03.2014
(73) Proprietor: Shindengen Electric Manufacturing Co., Ltd., Tokyo 100-0004 (JP)
(72) Inventor: HARADA Tomomi, Hanno-shi Saitama 357-8585 (JP)
(74) Representative: Dr. Weitzel & Partner
(86) International application number: PCT/JP2011/060410
(87) International publication number: WO 2012/147194

(56) References cited:
- EP-A1- 2 133 988
- EP-A2- 2 001 099
- WO-A1-2007/114272
- WO-A1-2008/120734
- JP-A- 7 303 391
- US-A- 5 493 200
- US-A- 5 929 577
- St Microelectronics: "AN1946 APPLICATION NOTE SENSORLESS BLDC MOTOR CONTROL AND BEMF SAMPLING METHODS WITH ST7MC", , 12 July 2007 (2007-07-12), XP055221360, Retrieved from the Internet: URL:http://www.st.com/st-web-ui/static/act ive/en/resource/technical/document/applica tion_note/CD00020086.pdf [retrieved on 2015-10-15]
- None

## Description

### TECHNICAL FIELD

The present invention relates to a brushless motor control device and a brushless motor control method for controlling a three-phase brushless motor to be used as a starter motor and an alternate current power generator of an internal combustion (engine).Reference is made to St Microelectronics: "AN1946 APPLICATION NOTE SENSORLESS BLDC MOTOR CONTROL AND BEMF SAMPLING METHODS WITH ST7MC", 12 July 2007 (2007-07-12), XP055221360, Retrieved from the Internet: URL:http://www.st.com/st-web-ui/static/active/en/resource/technical/document/applicati on_note/CD00020086.pdf [retrieved on 2015-10-15].

### BACKGROUND ART

Generally, as systems for drive-controlling brushless motors to be used as starters of internal combustions (engines), sensor drive control circuits have been known. In a sensor drive control circuit, multiple hole devices for detecting the position of a rotor (on the permanent magnet side) in a brushless motor are mounted around the rotor (see Non-Patent Document 1). However, the sensor drive control circuit requires that multiple hole devices be provided in the motor and requires that a magnet or the like for detecting the position of the rotor be mounted separately from the rotor as needed, thereby impeding miniaturization and cost reduction of the motor. Additionally, the precision of detecting the position of the rotor varies depending on the mounted state of the hole device. For this reason, implementation of a sensorless drive control circuit that detects the position of a rotor without using a sensor such as a hole device has been strongly demanded.

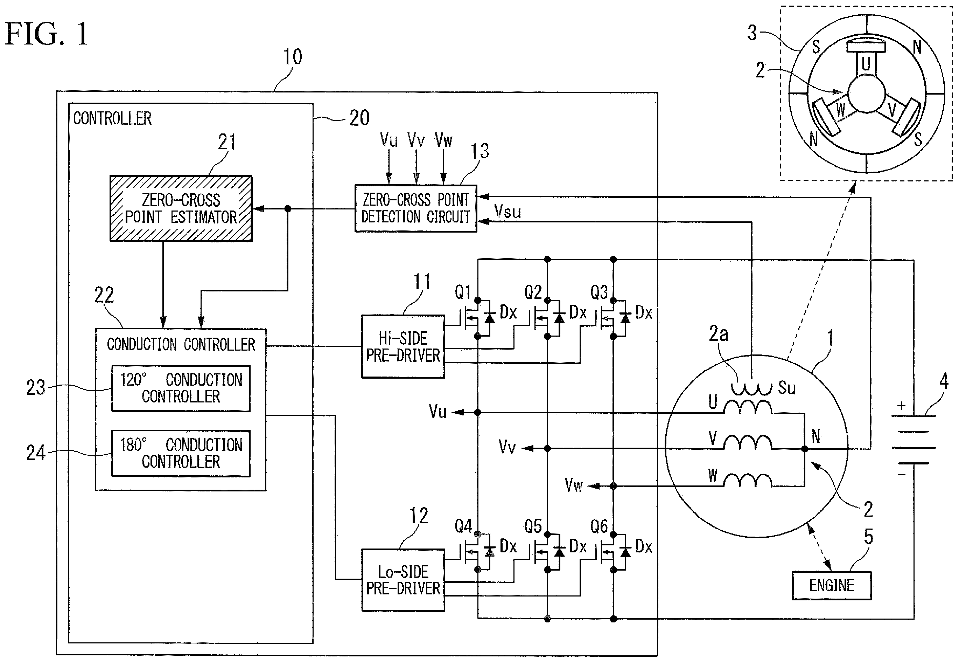

As one of the above-explained sensorless drive control circuits, for example, a drive control system using 120° conduction (system in which conduction is performed only in a 120° interval among the full 180° interval). Regarding the 120° conduction, zero-cross points of the phase voltage of a non-conduction phase are detected, thereby detecting the position of a rotor. Additionally, there is a brushless motor control device which is provided with a sub-coil that detects the phase voltage of any one of three phases of a three-phase brushless motor (see, for example a sub-coil Su included in the three-phase brushless motor 1 shown in FIG. 1), and which detects the phase voltage (sine wave voltage) of one phase induced to that sub-coil, thereby controlling 180° conduction (see Patent Document 1).

The brushless motor control device disclosed in Patent Document 1 generates a rectangular wave synchronized with the phase voltage of the one phase detected by the sub-coil Su, and generates a triangular wave synchronized with the phase from 0° to 180° of the rectangular wave. Additionally, the brushless motor control device generates a triangular wave synchronized with the phase from 180° to 360° of the rectangular wave. Then, based on those triangular waves, the brushless motor control device generates rectangular waves synchronized with the two other phases (rotor position detection waveforms). Then, the brushless motor control device estimates the position of the rotor based on those rectangular waves, thus performing drive control by 180° conduction on the three-phase brushless motor. Similarly, there is a battery charging device which detects the phase voltage of one phase of a three-phase brushless motor (brushless motor that operates as a three-phase AC power generator) to be induced to a sub-coil, estimates the phases of the phase voltages of the two other phases, rectifies the AC output voltage of the three-phase brushless motor, thereby charging a battery (see Patent Document 2).

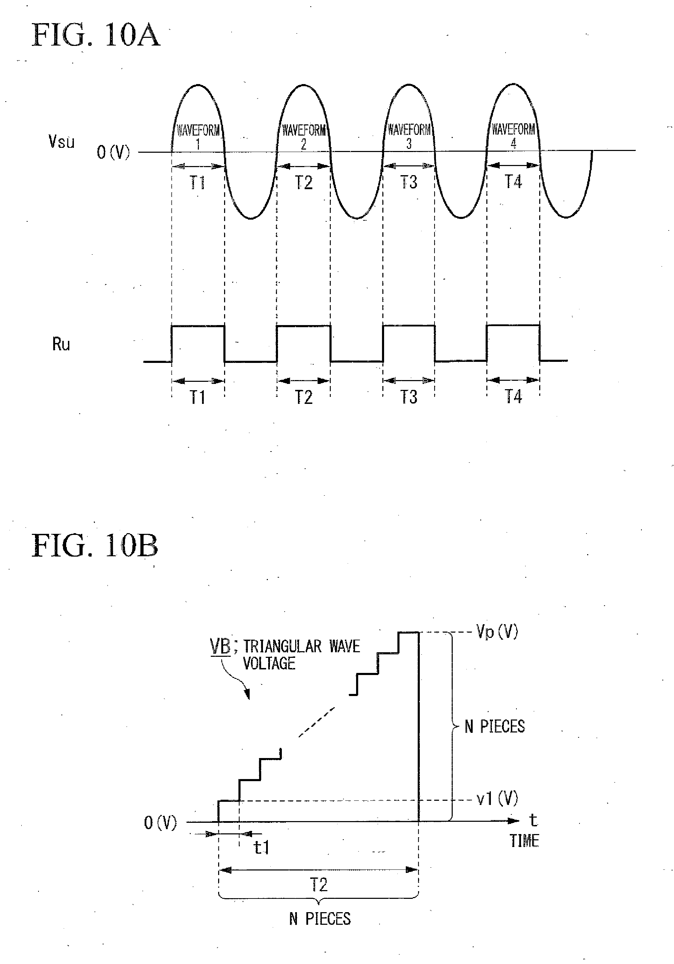

The above brushless motor control device disclosed in Patent Document 1 generates a triangular wave from a rectangular wave synchronized with the U-phase, thereby generating rectangular waves synchronized with the two other phases (V-phase, W phase). In this case, the brushless motor control device generates a triangular wave with a constant height (the peak voltage of the triangular wave) that is irrespective of the size of the pulse width of the U-phase rectangular wave. Here, one example of a mechanism of generating a triangular wave with the constant peak voltage which is synchronized with the U-phase rectangular wave is explained with reference to FIGS. 10A and 10B.

In general, the number of rotations of the three-phase brushless motor, that is, the frequency of the U-phase voltage (AC voltage) Vsu output from the sub-coil Su does not vary extensively. For this reason, the waveform in the current cycle can be considered to be substantially the same as the waveform in the previous cycle. For example, if it is assumed in FIG. 10A that a waveform 2 is the waveform in the current cycle, a half cycle T2 of the waveform 2 is substantially the same as a half cycle T1 of a waveform 1 in the one-previous cycle. Using the above characteristics, a triangular wave voltage VB is generated by the following steps.

(Step 1) As shown in FIG. 10A, in the cycle of the waveform 1, a rectangular wave Ru is generated from the AC voltage Vsu output from the sub-coil Su. A half cycle of the rectangular wave Ru associated with the waveform 1 matches the half cycle T1 of the AC voltage Vsu in the cycle of the waveform 1.
(Step 2) Subsequently, a time of the half cycle T1 of the rectangular wave Ru is counted.
(Step 3) The counted number of the time of the half cycle T1 is divided by a predetermined resolution n to obtain time t1 (=T1/n). Here, the resolution n is a value that defines the smoothness of a slope of the triangular wave voltage VB. As the resolution n increases, the slope of the triangular wave voltage VB is smoother.
(Step 4) Subsequently, the peak voltage Vp of the triangular wave voltage VB is divided by the predetermined resolution n to obtain the voltage v1 (=Vp/n).
(Step 5) Subsequently, as shown in FIG. 10B, the triangular wave voltage VB is increased by the above voltage v1 at the rising timing of the waveform 2 in the next cycle (timing at which counting of T2 is initiated). Then, the resulting triangular wave voltage VB is maintained for the above time t1.
(Step 6) In the same cycle of the waveform 2, the triangular wave voltage VB is further increased by the above voltage v1 at the timing at which the above time t1 elapses. After this process is repeated n times in total, a stepwise waveform as shown in FIG. 10B is obtained, thus obtaining a stepwise waveform corresponding to the slope portion of the triangular wave voltage associated with the cycle of the waveform 2. If the value of the resolution n is increased, the stepwise waveform is smoother, thereby obtaining a more favorable triangular wave. By the above steps, using the waveform of the AC voltage Vsu in the one-previous cycle, it is possible to generate a triangular wave with the constant peak voltage Vp, which is a triangular voltage associated with each cycle of the AC voltage Vsu.

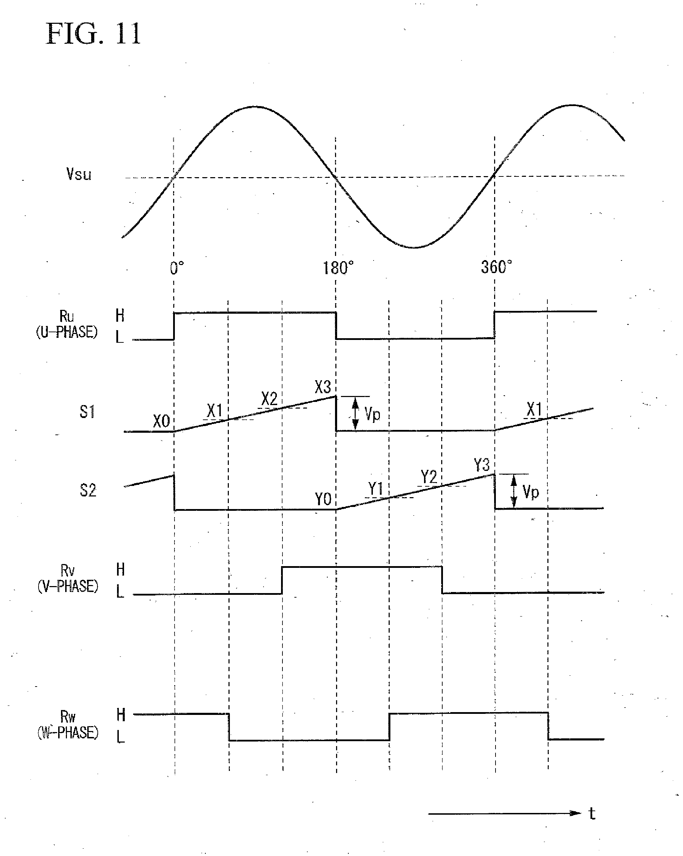

Then, as shown in FIG. 11, a first triangular wave S1 is generated in synchronization with the phase from 0° to 180°of the U-phase rectangular wave Ru. Additionally, a second triangular wave S2 is generated in synchronization with the phase from 180° to 360° of the U-phase rectangular wave Ru. Then, a voltage detection circuit (comparison circuit), which is not shown, generates a V-phase rectangular wave Rv which is inverted in level at a voltage point X2 that is 2/3 of the peak voltage Vp of the first triangular wave S1 and which is inverted in level at a voltage point Y2 that is 2/3 of the peak voltage Vp of the second triangular wave S2. Additionally, the voltage detection circuit generates a W-phase rectangular wave Rw which is inverted in level at a voltage point XI that is 1/3 of the peak voltage Vp of the first triangular wave S1 and which is inverted in level at a voltage point Y1 that is 1/3 of the peak voltage Vp of the second triangular wave S2.

By the above procedure, it is possible to generate the rectangular waves Rv and Rw synchronized with the two other phases with reference to the rectangular wave Ru synchronized with the AC output voltage Vsu of the U-phase. Then, the brushless motor control device estimates the position of the rotor based on those rectangular waves Ru, Rv, and Rw, and controls 180° conduction on the brushless motor.

Further, there is a related motor control device (see Patent Document 3). An object of the motor control device disclosed in Patent Document 3 is to provide a motor driving device and a rotator position detection method which can precisely detect rotator position information to be used for driving a motor, without using a rotational position sensor.

### CITATION LIST

### [Patent Document]

[Patent Document 1] WO 2008/120734 A1
[Patent Document 2] WO 2007/114272 A1
[Patent Document 3] Japanese Patent Unexamined Application, First Publication No. JP 2003-164190 A

### [Non-Patent Document]

[Non-Patent Document 1] Shuichi Kondo, "Design of Brushless DC Motor Control Circuit", Transistor Technology, CQ Publishing Co., Ltd., February 2000, p.212-220

### DISCLOSURE OF INVENTION

### Problems to be Solved by the Invention

The above brushless motor control device disclosed in Patent Document 1 requires a triangular wave generation circuit for generating triangular waves and a voltage detection circuit for detecting the voltages of the triangular waves. For this reason, a higher cost results from providing the triangular wave generation circuit and the voltage detection circuit. Additionally, there is a problem in that the precision of detection deteriorates due to fluctuation of the property of components used in the voltage detection circuit. These situations are similar to the battery charging device disclosed in Patent Document 2.

An object of the present invention is to provide a brushless motor control device and a brushless motor control method.

Further, an object of the present invention is to provide a brushless motor control device and a brushless motor control method, which detects the phase voltage of only one of the three phases of the three-phase brushless motor in a case where a three-phase brushless motor without a rotational position sensor is drive-controlled by 180° conduction, and thereby can estimate phases of the phase voltages of the two other phases (and the position of the rotor based on the phase of the phase voltage of each phase) without using the above triangular wave generation circuit and the voltage detection circuit, when phases of the phase voltages of the two other phases are estimated from the phase voltage of the one phase.

### Means for Solving the Problems

The above problems are solved in the present invention by a brushless motor control system according to claims 1 and a brushless motor control method according to claim 7. A brushless motor control device according to one aspect of the present invention is configured to drive control a three-phase brushless motor. The brushless motor control device includes: a phase voltage detector configured to detect a phase voltage of any one phase of three phases of the three-phase brushless motor; a zero-cross point detector configured to detect zero-cross points of the phase voltage of the one phase detected by the phase voltage detector; a zero-cross point estimator configured to measure a time interval T between the zero-cross points detected by the phase voltage detector, calculate a time T/3 and a time 2T/3 based on the time interval T between the zero-cross points, and estimate zero-cross points of two other phases of the three phases; and a conduction controller configured to estimate a rotational position of a rotor based on the zero-cross points of the phase voltage of the one phase and the estimated zero-cross points of the two other phases, and control conduction on each phase coil of the three-phase brushless motor. The three-phase brushless motor includes a plurality of poles each including a U-phase coil, a V-phase coil, and a W-phase coil which are on a stator side. One of the U-phase coil, the V-phase coil, and the W-phase coil, which is included in one of the poles, is floated. The phase voltage detector is configured to detect a phase voltage of one of the three phases of the three-phase brushless motor using the floated coil.

In the brushless motor control device having the above configuration, the phase voltage of any one phase of the three-phase brushless motor is detected, and a time interval between the zero-cross points thereof is measured. Additionally, based on the time interval between the zero-cross points, a time T/3 and a time 2T/3 are calculated, and thus zero-cross points of the two other phases are estimated. Then, based on the estimated zero-cross points, phases of the phase voltages of the two other phases (and the position of the rotor based on the phase of the phase voltage of each phase) are estimated, thereby controlling conduction on each phase coil.

Thus, in a case where the rotational-position-sensorless three-phase brushless motor is drive-controlled by 180° conduction, it is possible to estimate, based on the phase voltage of any one of the three phases of the three-phase brushless motor, phases of the phase voltages of the two other phases (and the position of the rotor based on the phase of the phase voltage of each phase) without using a triangular wave generation circuit and a voltage detection circuit. For this reason, it is possible to estimate the position of the rotor based on the phase voltage of any one of the three phases of the three-phase brushless motor, thereby controlling conduction on each phase coil of the three-phase brushless motor.

Additionally, regarding the brushless motor control device according to one aspect of the present invention, the zero-cross point estimator is configured to, in a case that after a zero-cross point of the phase voltage of the one phase occurs, before the time interval T between the zero-cross points elapses, a next zero-cross point of the phase voltage of the one phase occurs, reestimate zero-cross points of the two other phases based on the next zero-cross point.

In the brushless motor control device having the above configuration, the phase voltage of any one phase of the three-phase brushless motor is detected, and a time interval between the zero-cross points thereof is measured. Additionally, based on the time interval between the zero-cross points, a time T/3 and a time 2T/3 are calculated, and thus zero-cross points of the two other phases are estimated. Then, in a case that after a zero-cross point of the phase voltage of the one phase occurs, before the time interval T between the zero-cross points elapses, a next zero-cross point of the phase voltage of the one phase occurs, zero-cross points of the two other phases are reestimated based on the next zero-cross point.

Thus, even in a case where the number of rotations of the three-phase brushless motor varies, it is possible to estimate, in accordance with the number of rotations of the motor, phases of the phase voltages of the two other phases based on the phase voltage of any one phase of the three-phase brushless motor.

Further, regarding the brushless motor control device according to one aspect of the present invention, the zero-cross point estimator is configured to, in a case that a next zero-cross point of the phase voltage of the one phase occurs before the estimated zero-cross points of the two other phases occur, reestimate zero-cross points of the two phases based on the next zero-cross point.

In the brushless motor control device having the above configuration, the phase voltage of any one phase of the three-phase brushless motor is detected, and a time interval between the zero-cross points thereof is measured. Additionally, based on the time interval between the zero-cross points, a time T/3 and a time 2T/3 are calculated, and thus zero-cross points of the two other phases are estimated. Then, in a case that a next zero-cross point of the phase voltage of the one phase occurs before the estimated zero-cross points of the two other phases occur, zero-cross points of the two phases are reestimated based on the next zero-cross point.

Thus, even in a case where the number of rotations of the three-phase brushless motor varies extensively, it is possible to estimate, in accordance with the number of rotations of the motor, phases of the phase voltages of the two other phases based on the phase voltage of any one phase of the three-phase brushless motor.

Moreover, regarding the brushless motor control device according to one aspect of the present invention, the conduction controller comprises a phase control regulator configured to, in a case that the three-phase brushless motor operates as a three-phase alternate-current power generator, estimate phases of phase voltages of the two other phases based on the zero-cross points of the phase voltage of the one phase and the estimated zero-cross points of the two other phases, rectify and phase control an alternate-current output voltage of each phase output from the three-phase brushless motor, and charge the battery.

In the brushless motor control device having such the configuration, in a case that the three-phase brushless motor operates as a three-phase alternate-current power generator to be rotary driven by an internal combustion (engine), the zero-cross point estimator estimates phases of phase voltages of the two other phases based on the zero-cross points of the phase voltage of the one phase. Additionally, the phase control regulator included in the conduction controller estimates phases of phase voltages of the two other phases based on the zero-cross points of the phase voltage of the one phase and the estimated zero-cross points of the two other phases, rectify and phase control an alternate-current output voltage of each phase output from the three-phase brushless motor (three-phase alternate-current power generator), and charge the battery.

Thus, in a case that the three-phase brushless motor operates as a three-phase alternate-current power generator, it is possible to estimate phases of phase voltages of the two other phases based on the zero-cross points of the phase voltage of any one phase of the three-phase brushless motor without using a triangular wave generation circuit and a voltage detection circuit, rectify and phase control an alternate-current output voltage of each phase output from the three-phase brushless motor (three-phase alternate-current power generator), and charge the battery.

In the brushless motor control device having the above configuration, the three-phase brushless motor including a plurality of poles each including a U-phase coil, a V-phase coil, and a W-phase coil which are on a stator side is used. One of the U-phase coil, the V-phase coil, and the W-phase coil, which is included in one of the poles, is floated to form a sub-coil. Then, the phase voltage is obtained from the floated sub-coil. Thereby, a phase of that phase is detected, and the time interval T between the zero-cross points is measured simultaneously. Then, a time T/3 and a time 2T/3 are calculated, thereby estimating zero-cross points of the two other phases.

Thus, it is possible to suppress a reduction in the output of the three-phase brushless motor so that the reduction is caused by only one phase included in one pole, and to form a sub-coil without increasing a manufacturing cost.

Further, regarding the brushless motor control device according to one aspect of the present invention, the three-phase brushless motor is a motor configured to operate as a starter motor for staring-up an internal combustion, and operate as a three-phase alternate-current power generator to be rotary-driven by the internal combustion.

In the brushless motor control device having the above configuration, the three-phase brushless motor operates as a starter motor when an internal combustion is started-up, and operates as a three-phase alternate-current power generator to be rotary-driven by the internal combustion after the internal combustion is started-up.

Thus, in a case where the three-phase brushless motor is operated as a starter motor, and in a case where the three-phase brushless motor is operated a three-phase alternate-current power generator, it is possible to estimate, based on based on the phase voltage of any one of the three phases of the three-phase brushless motor, phases of the phase voltages of the two other phases (and the position of the rotor based on the phase of the phase voltage of each phase) without using a triangular wave generation circuit and a voltage detection circuit.

Moreover, a brushless motor control method according to one aspect of the present invention is a brushless motor control method of drive controlling a three-phase brushless motor. The brushless motor control method includes: a phase voltage detection step of detecting a phase voltage of any one phase of three phases of the three-phase brushless motor; a zero-cross point detection step of detecting zero-cross points of the phase voltage of the one phase detected in the phase voltage detection step; a zero-cross point estimation step of measuring a time interval T between the zero-cross points detected in the phase voltage detection step, calculating a time T/3 and a time 2T/3 based on the time interval T between the zero-cross points, and estimating zero-cross points of two other phases of the three phases; and a conduction control step of estimating a rotation position of a rotor based on the zero-cross points of the phase voltage of the one phase and the estimated zero-cross points of the two other phases, and controlling conduction on each phase coil of the three-phase brushless motor. The three-phase brushless motor includes a plurality of poles each including a U-phase coil, a V-phase coil, and a W-phase coil which are on a stator side. One of the U-phase coil, the V-phase coil, and the W-phase coil, which is included in one of the poles, is floated. In the phase voltage detection step, a phase voltage of one of the three phases of the three-phase brushless motor is detected using the floated coil.

In the brushless motor control method including the above steps, the phase voltage of any one phase of the three-phase brushless motor is detected, and a time interval between the zero-cross points thereof is measured. Additionally, based on the time interval between the zero-cross points, a time T/3 and a time 2T/3 are calculated, and thus zero-cross points of the two other phases are estimated. Then, based on the estimated zero-cross points, phases of the phase voltages of the two other phases (and the position of the rotor based on the phase of the phase voltage of each phase) are estimated, thereby controlling conduction on each phase coil.

Thus, in a case where the rotational-position-sensorless three-phase brushless motor is drive-controlled by 180° conduction, it is possible to estimate, based on the phase voltage of any one of the three phases of the three-phase brushless motor, phases of the phase voltages of the two other phases (and the position of the rotor based on the phase of the phase voltage of each phase) without using a triangular wave generation circuit and a voltage detection circuit. For this reason, it is possible to estimate the position of the rotor based on the phase voltage of any one of the three phases of the three-phase brushless motor, thereby controlling conduction on each phase coil of the three-phase brushless motor.

### Effects of the Invention

The brushless motor control device of the present invention detects the phase voltage of any one of the three phases of the three-phase brushless motor, and measures the time interval T between zero-cross points thereof. Based on the time interval T between the zero-cross points, the brushless motor control device calculates a time T/3 and a time 2T/3 and estimates zero-cross points of the two other phases. Then, based on the estimated zero-cross points, the brushless motor control device estimates phases of the phase voltages of the two other phases (and the position of the rotor based on the phase of the phase voltage of each phase), thereby controlling conduction on each phase coil.

Thus, in a case where the position-sensorless three-phase brushless motor is drive-controlled by 180° conduction, it is possible to estimate, based on the phase voltage of any one of the three phases of the three-phase brushless motor, phases of the phase voltages of the two other phases (and the position of the rotor based on the phase of the phase voltage of each phase) without using a triangular wave generation circuit and a voltage detection circuit. For this reason, it is possible to estimate the position of the rotor based on the phase voltage of any one of the three phases of the three-phase brushless motor, thereby controlling conduction of coils for each phase of the three-phase brushless motor.

### BRIEF DESCRIPTION OF THE DRAWINGS

FIG. 1 is a diagram illustrating a configuration of a brushless motor control device according to an embodiment of the present invention.
FIG. 2 is a diagram illustrating an example of a configuration of a sub-coil.
FIG. 3A is a diagram illustrating an example of another configuration of the sub-coil.
FIG. 3B is a diagram illustrating operation of the zero-cross point estimator 21 for the sub-coil shown in FIG. 3A.
FIG. 4 is a diagram illustrating control operation of the three-phase brushless motor performing estimation of zero-cross points.
FIG. 5 is a diagram illustrating 120° conduction.
FIG. 6 is a diagram illustrating control of a duty ratio.
FIG. 7 is a diagram illustrating operation of estimating zero-cross points when the number of rotations varies.

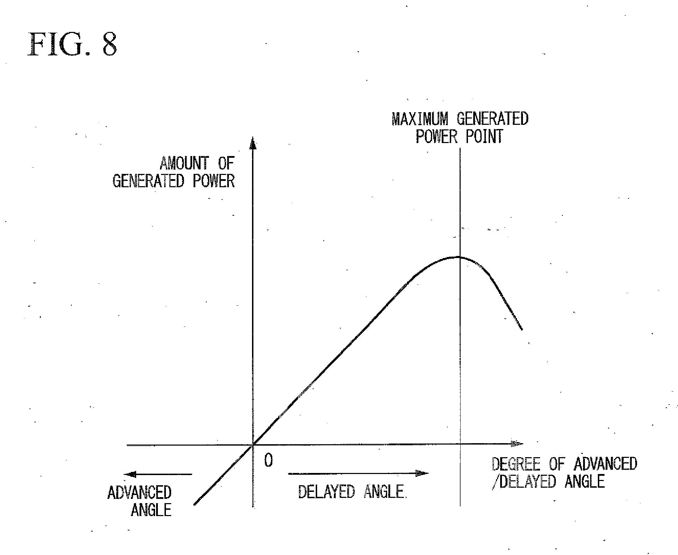

FIG. 8 is a diagram illustrating advanced-angle/delayed-angle control.
FIG. 9 is a diagram illustrating an example of a configuration in a case where a brushless motor control device is operated as a battery charging device.
FIG. 10A is a diagram illustrating an example of a mechanism of generating a triangular wave with the constant peak voltage.
FIG. 10B is a diagram illustrating an example of a mechanism of generating a triangular wave with the constant peak voltage.
FIG. 11 is a diagram illustrating a method of generating a V-phase rectangular wave and a W-phase rectangular wave.

### BEST MODE FOR CARRYING OUT THE INVENTION

Hereinafter, an embodiment of the present invention is explained with reference to the accompanying drawings.

### (Explanation of Entire Configuration of Brushless Motor Control Device)

FIG. 1 is a diagram illustrating a configuration of a brushless motor control device according to an embodiment of the present invention. A brushless motor control device 10 shown in FIG. 1 is a control device that converts the direct-current (DC) voltage of a battery 4 as a DC power source into an alternate-current (AC) voltage, and thus drives a three-phase brushless motor 1.

In FIG. 1, the three-phase brushless motor (hereinafter, referred to simply as a "motor") 1 is a starter motor for an engine 5, and also serves as a three-phase AC power generator to be rotary-driven by the engine 5. The three-phase brushless motor 1 includes: a stator 2 including a U-phase coil, a V-phase coil, and a W phase coil (coil coiled around an iron core), and neutral wires N of the coils; and a rotor 3 including tetrapolar permanent magnets (two pairs of N and S poles). Additionally, winding wires (coils) for three phases (U, V, and W) are coiled around the stator 2 sequentially in a circumferential direction.

Further, the U-phase coil of the stator 2 is provided in parallel with a sub-coil (Su) 2a, which detects the voltage Vsu induced to the U-phase (more accurately, the sine wave voltage induced to the sub-coil Su by the permanent magnet of the rotor 3). Here, the sub-coil Su may be provided for another phase (V-phase or W-phase).

A brushless motor control device 10 includes a three-phase bridge circuit including switching elements Q1 to Q6 which are Nch-FFTs (field effect transistors). In the three-phase bridge circuit, drain terminals of the respective switching elements Q1 to Q3 on the upper arm side are commonly coupled to a positive terminal of the battery 4 that serves as a DC power source. Additionally, source terminals of the respective switching elements Q4 to Q6 on the lower arm side are commonly coupled to a negative terminal of the battery 4 that serves as the DC power source.

Additionally, the source terminal of the switching element Q1 on the upper arm side is coupled to the drain terminal of the switching element Q4 on the lower arm side. A connecting point of those switching elements Q1 and Q4 is coupled to a terminal of the U-phase coil of the three-phase brushless motor 1. Further, the source terminal of the switching element Q2 on the upper arm side is coupled to the drain terminal of the switching element Q5 on the lower arm side. A connecting point of those switching elements Q2 and Q5 is coupled to a terminal of the V-phase coil of the three-phase brushless motor 1.

Moreover, the source terminal of the switching element Q3 on the upper arm side is coupled to the drain terminal of the switching element Q6 on the lower arm side. A connecting point of those switching elements Q3 and Q6 is coupled to a terminal of the W-phase coil of the three-phase brushless motor 1. Here, fly wheel diodes Dx are coupled in parallel to the respective switching elements Q1 to Q6 such that a cathode is coupled to the positive terminal side of the battery 4, and an anode is coupled to the negative terminal side of the battery 4, as shown in the figure. Here, the switching elements Q1 to Q6 may be IGBTs (insulated gate bipolar transistors) or bipolar transistors.

Additionally, the brushless motor control device 10 includes: a Hi (high)-side pre-driver circuit 11 that on/off drives the switching elements (FETs) Q1 to Q3 on the upper arm; a Lo (low)-side pre-driver circuit 12 that on/off drives the switching elements (FETs) Q4 to Q6 on the lower arm side; a zero-cross point detection circuit 13; and a controller 20. The above switching elements Q1 to Q6 are driven by gate driving signals output from the Hi-side pre-driver circuit 11 and the Lo-side pre-driver circuit 12. These gate driving signals are generated by the pre-driver circuits 11 and 12 based on FET driving signals output from the controller (controller including a CPU and the like) 20.

When the three-phase brushless motor 1 rotates at low speed (when 120° conduction is performed as will be explained), the zero-cross point detection circuit 13 detects zero-cross points of the voltages Vu, Vv, and Vw induced to the respective phase coils (the U-phase coil, the V-phase coil, and the W-phase coil) of the stator 2. Further, when the three-phase brushless motor 1 rotates at high speed (when 180° conduction is performed as will be explained), the zero-cross point detection circuit 13 detects zero-cross points from the voltage (U-phase voltage) Vsu induced to the sub-coil Su provided for the U-phase coil of the three-phase brushless motor 1. Information concerning the zero-cross points detected by the zero-cross point detection circuit 13 is transmitted to the controller 20, as a zero-cross point signal. Here, the zero-cross points of the AC voltages induced to the respective phase coils (the U-phase coil, the V-phase coil, and the W-phase coil) and the zero-cross points of the AC voltage induced to the sub-coil Su during the 120° conduction are zero-cross points occurring when a middle point of the magnetic poles of the rotor 3 (boundary point of N and S poles) matches the position of each coil.

The controller 20 includes a zero-cross point estimator 21 and a conduction controller 22. Additionally, the conduction controller 22 includes: a 120° conduction controller 23 that performs 120° conduction on the three-phase brushless motor 1; and a 180° conduction controller 24 that performs 180° conduction on the three-phase brushless motor 1. The 120° conduction controller 23 controls the three-phase brushless motor 1 to be driven by 120° conduction (conduction in two of the three phases) when the three-phase brushless motor 1 rotates at low speed. Additionally, the 180° conduction controller 24 controls the three-phase brushless motor 1 to be driven by 180° conduction (conduction in full phase) when the three-phase brushless motor 1 rotates at high speed.

In a case where 180° conduction is performed on the three-phase brushless motor 1, the zero-cross point estimator 21 included in the controller 20 receives from the zero-cross point detection circuit 13, information concerning the zero-cross points of the voltage Vsu induced to the sub-coil Su. Then, the zero-cross point estimator 21 measures a time interval T between the zero-cross points (adjacent zero-cross points) of the voltage Vsu induced to the sub-coil Su. For example, the zero-cross point estimator 21 measures the time interval T between the zero-cross points by counting, using a timer or the like, an interval from the time when the a zero-cross point of the output voltage Vsu of the sub-coil Su occurs to the time when the next zero-cross point of the output voltage Vsu occurs.

Further, the zero-cross point estimator 21 calculates a time "T/3" and a time "2T/3" based on the time interval T between the zero-cross points, and thus estimates zero-cross points (phases) of the two other phases (V-phase, W-phase). Then, the zero-cross point estimator 21 transmits to the conduction controller 22, information concerning the zero-cross points of the voltage Vsu induced to the sub-coil Su (zero-cross points of the U-phase), and information concerning the estimated zero-cross points of the two other phases (V-phase, W-phase). The details of the operation for the zero-cross point estimator 21 to estimate the zero-cross points of the two other phases (V-phase, W-phase) will be explained later. Additionally, the sub-coil Su may be provided for the V-phase or the W-phase, not for the U-phase. In this case, based on the voltage Vsu induced to the sub-coil Su, the zero-cross point estimator 21 estimates the zero-cross points of the two other phases not provided with the sub-coil Su.

Here, the brushless motor control device 10 is mounted with a microcomputer (or microcontroller). The controller 20, the zero-cross point estimator 21, the conduction controller 22, and other circuits, which are included in the brushless motor control device 10, may be implemented by a software process if the process functions of those elements can be implemented by the above microcomputer executing software programs. As a matter of course, those elements may be implemented by hardware.

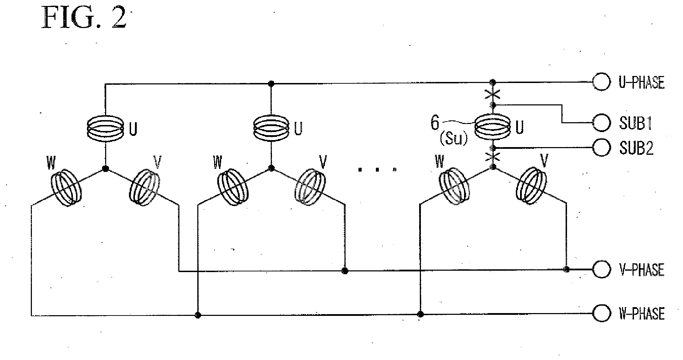

Regarding the sub-coil Su provided in the three-phase brushless motor 1, the sub-coil Su is provided in parallel with the U-phase coil of the stator, and the U-phase inducing voltage Vsu (sine wave voltage induced to the sub-coil Su by rotation of the rotor) can be detected by that sub-coil Su, as shown in FIG. 1. Alternatively, the sub-coil Su may be configured by a method shown in FIG. 2.

In the case of FIG. 2, the three-phase brushless motor having multiple poles (six poles in the shown example) on the stator side is used, and the coil 6 of one pole associated with one of the phases (the U-phase in the shown example) is floated, thus forming the sub-coil Su. In other words, the coil 6 of one of the total six poles associated with the U-phase is removed (is floated), terminals SUB1 and SUB2 are drawn from the removed coil 6, and thus the U-phase voltage Vsu (AC voltage induced to the coil 6 by the rotator 3) is obtained from the terminals SUB1 and SUB2. The zero-cross point estimator 21 receives from the zero-cross detection circuit 13, the information concerning zero-cross points of the voltage Vsu induced to the floated coil 6. Then, the zero-cross point estimator 21 detects a phase of the voltage Vsu induced to the sub-coil Su and simultaneously measures a time interval T between adjacent zero-cross points, thereby estimating zero-cross points of the two other phases (V-phase, W-phase).

### (Explanation of Operation of Zero-Cross Point Estimator 21)

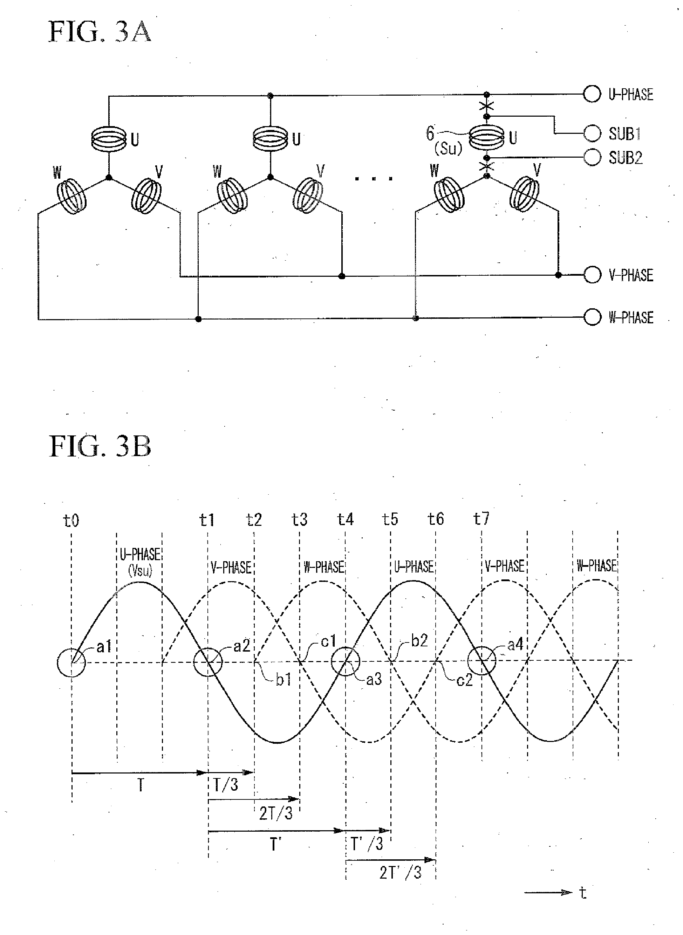

FIGS. 3A and 3B are diagrams illustrating operation of the zero-cross point estimator 21. FIG. 3A shows an example where the coil 6 of one pole, which is the U-phase coil, is cut away from the other winding wires and is floated, and the floated coil 6 is regarded as a sub-coil Su. FIG. 3A is the same diagram as FIG. 2.

Additionally, FIG. 3B shows the voltage (U-phase voltage) Vsu induced to the sub-coil Su, zero-cross points of the voltage Vsu, and estimated zero-cross points of the V-phase and W-phase voltages, and V-phase and W-phase waveforms with the estimated zero-cross points (waveforms of virtual V-phase and W-phase induced voltages that are not actually detected), where a horizontal direction denotes elapsed time t.

The zero-cross point estimator 21 detects a phase of the U-phase voltage (phase of the voltage Vsu induced to the sub-coil Su) based on detection signals of the zero-cross points of the output voltage Vsu of the sub-coil Su which are detected by the zero-cross point detection circuit 13. Additionally, the zero-cross point estimator 21 calculates the time interval T between adjacent zero-cross points. More specifically, as shown in FIG. 3B, the time interval T between adjacent zero-cross points (=t1-t0) is calculated based on a zero-cross point a1 at time t0 of the voltage Vsu induced to the sub-coil Su and a zero-cross point a2 at time t1.

Then, based on the time interval T between the adjacent zero-cross points a1 and a2 (180° interval), the zero-cross point estimator 21 calculates times 1/3T and 2/3T where the time interval T is divided by three (divided by 60°). The time 1/3T corresponds to the interval from the time t1 when the zero-cross point a2 of the V-phase occurs to the time t2 when a zero-cross point b1 of the W-phase voltage occurs, as shown in FIG. 3B. Similarly, the time 2/3T calculated by the zero-cross point estimator 21 corresponds to the interval from the time t1 when the zero-cross point a2 of the V-phase occurs to a time t3 when a zero-cross point c1 of the V-phase voltage occurs.

In other words, generally, the rotation speed of three-phase brushless motor 1 does not vary extensively. For this reason, regarding the output voltage (AC voltage) Vsu of the sub-coil Su, a waveform in the current cycle can be considered to be similar to the waveform in the one-previous cycle. For this reason, the zero-cross point estimator 21 can estimate zero-cross points of the subsequently occurring W-phase and V-phase based on the time interval T between adjacent zero-cross points of the output voltage Vsu of the sub-coil Su. Those zero-cross points are zero-cross points occurring when a middle point of the magnetic poles of the rotor (boundary point of N and S poles) matches the position of each coil. Those zero-cross points are estimated, thereby making it possible to estimate the position of the rotor. Thus, the conduction controller 22 can select a conduction pattern and a conduction timing in accordance with the position of the rotor, and perform conduction on the respective phase coils of the three-phase brushless motor 1.

Then, returning to time t4, when a zero-cross point a3 of the output voltage Vsu of the sub-coil Su occurs again, the zero-cross point estimator 21 measures a time interval T' between the adjacent zero-cross points a2 and a3. Based on the time interval T', the zero-cross point estimator 21 recalculates times 1/3T' and 2/3T'. The time 1/3T' calculated by the zero-cross point estimator 21 corresponds to the interval to time t5 when a zero-cross point b2 of the W-phase occurs, as shown in FIG. 3B. Similarly, the time 2/3T' calculated by the zero-cross point estimator 21 corresponds to the interval to time t6 when a zero-cross point c2 of the V-phase occurs. Thereafter, the zero-cross point estimator 21 repeats measurement of the time interval T between zero-cross points of the output voltage of the sub-coil Su and estimation of zero-cross points of the W-phase and the V-phase by calculation of the times 1/3T and 2/3T.

### (Explanation of Method of Controlling Three-Phase Brushless Motor by Estimation of Zero-Cross Points)

When the motor is stopped, the brushless motor control device 10 applies positive and negative DC voltages between coils for two of the U-phase, the V-phase, and the W-phase by the method disclosed in the aforementioned Patent Document 1, and thus can detect the stop position of the rotor from the rising characteristics of current. Then, the conduction controller 22 selects a conduction phase of a motor coil which can generate the maximum torque at the stop position of the rotor, thereby starting-up the motor.

Then, after the three-phase brushless motor 1 starts rotating, the conduction controller 22 controls conduction on each phase coil of the three-phase brushless motor 1 based on the zero-cross points of the voltage Vsu induced to the sub-coil Su and the zero-cross points of the W-phase and the V-phase estimated by the zero-cross point estimator 21. The control by the three-phase brushless motor 1 performing the estimation of zero-cross points is performed by the 180° conduction controller 22 included in the conduction controller 22. Here, when the three-phase brushless motor 1 is driven at low rotation speed, 120° conduction may be performed, instead of 180° conduction. 120° conduction will be explained later.

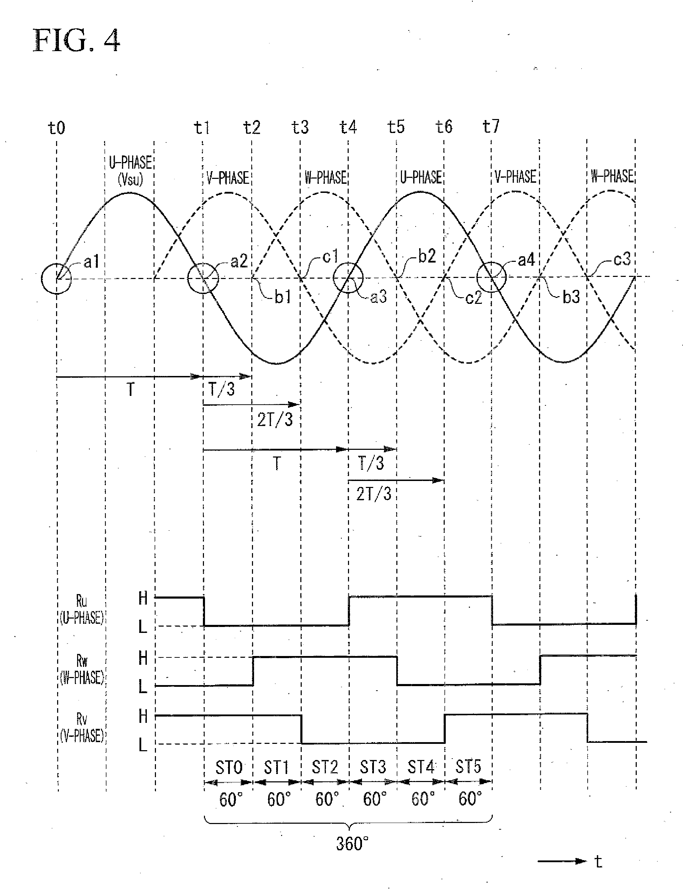

FIG. 4 is a diagram illustrating control operation of the three-phase brushless motor performing estimation of zero-cross points. FIG. 4 shows the output voltage Vsu of the sub-coil Su, the zero-cross points of the voltage Vsu, and estimated zero-cross points of the V-phase and W-phase voltages, and waveforms of the V-phase and the W-phase with the estimated zero-cross points (waveforms of virtual induced voltages of the V-phase and the W-phase which are not actually detected), where a horizontal direction denotes elapsed time t. Additionally, FIG. 4 shows waveforms (rotor position detection waveforms) obtained by arranging a rectangular wave Ru synchronized with the U-phase generated based on the zero-cross points, a rectangular wave Rw synchronized with the W-phase, and a rectangular wave Rv synchronized with the V-phase.

As shown in FIG. 4, the rectangular wave Ru is a waveform that is inverted in level at each zero-cross point (for example, a2, a3, and a4) of the waveform of the U-phase voltage (more accurately, the waveform of the output voltage of the sub-coil Su). The rectangular wave Ru varies from a H level (high level) to a L level (low level) at the zero-cross point a2, varies from the L level to the H level at the zero-cross point a3, and varies from the H level to the L level at the zero-cross point a4.

Additionally, the rectangular wave Rw is a waveform that is inverted in level at each zero-cross point (for example, b1, b2, and b3) of the waveform of the W-phase voltage (waveform of the virtual voltage that is not detected actually). The rectangular wave Rw of the W-phase varies from a L level to a H level at the zero-cross point b1, varies from the H level to the L level at the zero-cross point b2, and varies from the L level to the H level at the zero-cross point b3. Further, the rectangular wave Rv is a waveform that is inverted in level at each zero-cross point (for example, c1, c2, and c3) of the waveform of the V-phase voltage (waveform of the virtual voltage that is not detected actually). The rectangular wave Rv of the V-phase varies from a H level to a L level at the zero-cross point c1, varies from the L level to the H level at the zero-cross point c2, and varies from the H level to the L level at the zero-cross point c3.

Accordingly, since the zero-cross points of each phase are points where a middle point of the magnetic poles of the rotor (boundary point of N and S poles) passes, it is possible to detect rotor position information by detecting zero-cross points based on the H level state and the L level state of the respective rectangular waves Ru, Rv, and Rw synchronized with the W-phase, the U-phase, and the V-phase, which are shown in FIG. 4. For example, as shown in FIG. 4, it is possible to detect six segments from 0 to 5 at each 60 degrees. For example, in the one rotation cycle from time t1 to time t7 (360° interval in the U-phase), the position of the rotor is detected at each 60° based on the six segments, which are: a zero stage ST0 from time t1 to time t2; a first stage ST1 from time t2 to time t3; a second stage ST2 from time t3 to time t4; a third stage ST3 from time t4 to time t5; a fourth stage ST4 from time t5 to time t6; and a fifth stage ST5 from time t6 to time t7. The detected position of the rotor at each 60° can be regarded as points at which the stages (stages of the phase voltages at each 60° which are to be applied to the U-phase, the V-phase, and the W-phase) are switched.

Thus, the brushless motor control device 10 detects zero-cross points of the voltage Vsu induced only to one sub-coil Su, and estimates zero-cross points of the two other phases (V-phase, W-phase) (estimates the position of the rotor) based on the zero-cross points of the voltage Vsu. Then, the conduction controller 22 switches stages based on the zero-cross points of the output voltage (U-phase voltage) Vsu of the sub-coil Su and the estimated zero-cross points of the two other phases (V-phase, W-phase). Thus, it is possible to control switching of the conduction phase and the conduction timing with respect to the U-phase coil, the V-phase coil, and the W-phase coil. In other words, in the brushless motor control device 10, the zero-cross point estimator 21 estimates zero-cross points and selects a conduction pattern and a conduction timing in accordance with the position of the rotor, thereby performing conduction on the motor coils.

Here, when the motor rotates at high speed, in order to invoke the sufficient power of the motor, detection of the voltage (U-phase voltage) Vsu to be induced to the sub-coil and estimation of zero-cross points are performed as explained above, thereby performing 180° conduction. When the motor rotates at low speed, however, the motor may be driven by 120° conduction. The 120° conduction itself is a generally well-known method, and the 120° conduction will be briefly explained hereinafter.

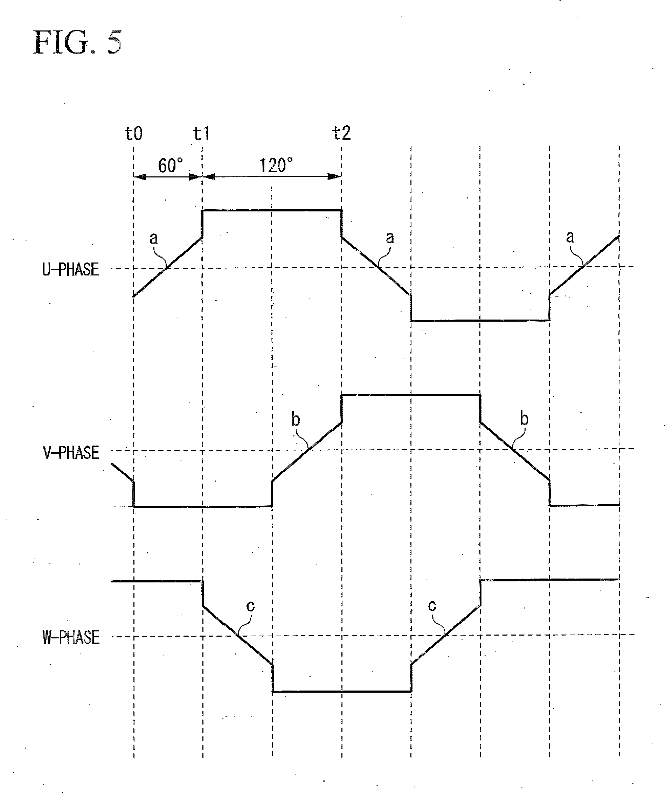

FIG. 5 is a diagram illustrating 120° conduction. The 120° conduction is performed by the 120° conduction controller 23 included in the conduction controller 22. In the 120° conduction method, coils are conducted only in the 120° interval among the full 180° interval, as shown in the waveforms of the U-phase voltage, the V-phase voltage, and the W-phase voltage, which are shown in FIG. 5. Accordingly, a non-conduction phase occurs in each of the U-phase, the V-phase, and the W-phase. Zero-cross points a, b, and c of those non-conduction phases are detected, thereby making it possible to detect the position of the rotor.

For example, the U-phase coil has a non-conduction phase from time t0 to time t1 (60° interval) and has a conduction phase from time t1 to time t2 (120° interval). In the segment corresponding to the non-conduction phase from time t0 to time t1 (60° interval), the voltage of the U-phase coil induced by the magnetic pole of the rotor occurs, and the zero-cross point a thereof is detected, thereby making it possible to detect the position of the rotor. Regarding the V-phase, similarly, the zero-cross point b thereof is detected in the segment corresponding to the non-conduction phase, thereby making it possible to detect the position of the rotor.

Regarding the W-phase, similarly, the zero-cross point c thereof is detected in the segment corresponding to the non-conduction phase, thereby making it possible to detect the position of the rotor. Thus, it is possible to detect the position of the rotor at each 60° (points at which the magnetic pole of the rotor switches), and determine the conduction phase and the conduction timing with respect to the U-phase, the V-phase, and the W-phase in accordance with the position of the rotor, thereby driving the three-phase brushless motor 1.

Here, when the motor rotates at low speed, the above detection of zero-cross points based on the voltage (U-phase voltage) Vsu induced to the sub-coil Su and the estimation of zero-cross points of the two other phases (V-phase, W-phase) by the zero-cross point estimator 21 are performed, thereby making it possible to control three-phase brushless motor 1 by 180° conduction, in lieu of the above 120° conduction.

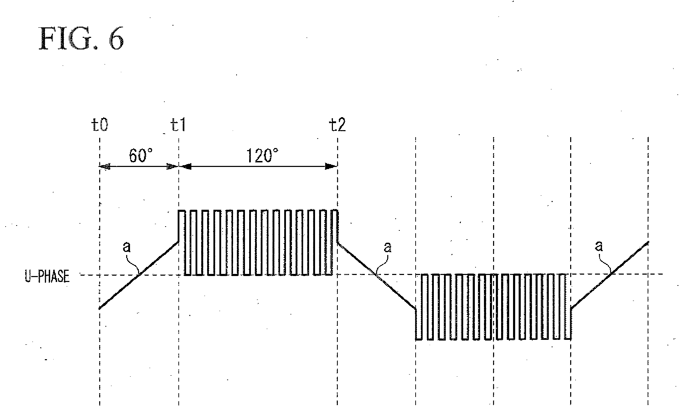

Additionally, in a case where 180° conduction is performed by the above 180° conduction controller 24, and 120° conduction is performed by the 120° conduction controller 23, in order to adjust the voltage to be applied to the three-phase brushless motor 1, it is possible to control an on/off duty ratio in the on-interval of each of the switching elements Q1 to Q6. For example, it is possible to vary the on/off duty ratio as shown in the voltage waveform of the U-phase coil during the 120° conduction shown in FIG. 6. Thus, it is possible to vary the voltage to be applied to the motor coils in accordance with the three-phase brushless motor 1. Additionally, during the 180° conduction, similarly, the on/off duty ratio is controlled, thereby making it possible to vary the voltage to be applied to the motor coils.

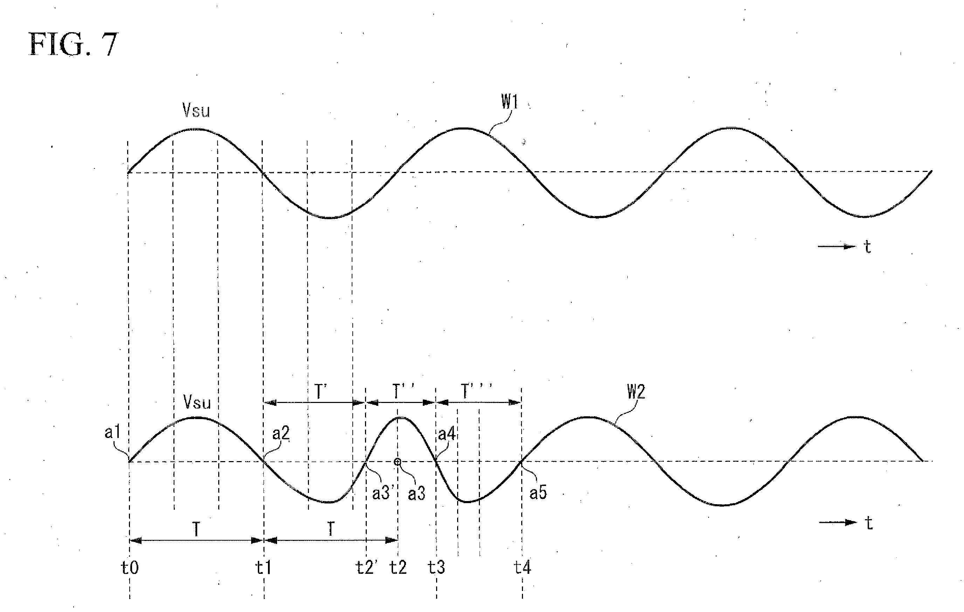

Additionally, FIG. 7 is a diagram illustrating an example in a case where the number of rotations of the three-phase brushless motor 1 varies. In the example shown in FIG. 7, a horizontal axis denotes elapsed time t, and a waveform (W1) of the voltage Vsu induced to the sub-coil Su when the number of rotations of the motor is constant, and a waveform (W2) of the voltage Vsu induced to the sub-coil Su when the number of rotations of the motor varies, are arranged in the vertical direction.

As shown in FIG. 7, in a case where after the zero-cross point a2 of the output voltage Vsu of the sub-coil occurs, the number of rotations of the motor varies, and the next zero-cross point a3' of the output voltage Vsu of the sub-coil Su occurs at time t2' prior to a point at which the zero-cross point a3 is expected to occur (point at time t2), zero-cross points of the two other phases are reestimated based on the next zero-cross point a3'.

For example, as shown in FIG. 7, the zero-cross point estimator 21 calculates the time interval T (=t1-t0) between the zero-cross points a1 and a2 based on the zero-cross point a1 at time t0 and the zero-cross point a2 at time t1 which are of the output voltage Vsu of the sub-coil Su. Then, the zero-cross point estimator 21 calculates a time T/3 and a time 2T/3 where the time interval T between adjacent zero-cross points is divided by three (divided by 60°), and thus estimates zero-cross points of the two other phases (V-phase, W-phase).

Then, in a case where the number of rotations of the motor increases, and a zero-cross point a3' of the voltage (U-phase voltage) Vsu inducted to the sub-coil Su occurs at time t2' prior to time t2 at which the zero-cross point a3 is expected to occur, the zero-cross point estimator 21 updates the time interval T between zero-cross points. In other words, the zero-cross point estimator 21 recalculates and updates, at the time (time t2'), the time interval T' between zero-cross points (t2'-t1') based on the zero-cross point a3' at time t2' and the zero-cross point a2 at time t1.

Then, the zero-cross point estimator 21 calculates T'/3 and 2T'/3 based on the updated time interval T' between zero-cross points, and reestimates zero-cross points of the two other phases (V-phase, W-phase). Then, the conduction controller 22 controls conduction on the three-phase brushless motor 1 based on information concerning the zero-cross points of the two other phases (V-phase, W-phase) reestimated by the zero-cross point estimator 21.

Then, when a zero-cross point a4 of the output voltage Vsu of the sub-coil Su occurs at time t3, the zero-cross point estimator 21 recalculates and updates, at the time (time t3), a time interval T" between zero-cross points (t3-t2') based on the zero-cross point a4 at time t3 and the zero-cross point a3' at time t2'. The zero-cross point estimator 21 calculates T"/3 and 2T"/3 based on the updated time interval T" between zero-cross points, and estimates zero-cross points of the two other phases (V-phase, W-phase). Then, the conduction controller 22 controls conduction on the three-phase brushless motor 1 based on information concerning the zero-cross points of the two other phases (V-phase, W-phase) reestimated by the zero-cross point estimator 21.

Similarly, when a zero-cross point a5 of the output voltage Vsu of the sub-coil Su occurs at time t4, the zero-cross point estimator 21 calculates, at the time t4, a time interval T'" between zero-cross points (t4-t3) based on the zero-cross point a5 at time t4 and the zero-cross point a4 at time t3. Then, the conduction controller 22 controls conduction on the three-phase brushless motor 1 based on information concerning the zero-cross points of the two other phases (V-phase, W-phase) reestimated by the zero-cross point estimator 21.

Thus, in the brushless motor control device 10, in a case where the number of rotations of the motor varies, and a zero-cross point of the voltage (U-phase voltage) Vsu inducted to the sub-coil Su occurs at a time prior to the time at which the zero-cross point is expected to occur, the time interval T between zero-cross points is updated based on the zero-cross point detected at that time and the previously-detected zero-cross point. Then, the zero-cross point estimator 21 calculates a time T/3 and a time 2T/3 based on the updated time interval T between zero-cross points, and thus reestimates zero-cross points of the two other phases (V-phase, W-phase). The conduction controller 22 controls conduction on the three-phase brushless motor 1 based on information concerning the reestimated zero-cross points of the two other phases (V-phase, W-phase). Thus, even in a case where the number of rotations of the motor varies, it is possible to adequately control conduction on the three-phase brushless motor 1.

Here, FIG. 7 shows an example in a case where after the zero-cross point a2 of the voltage Vsu inducted to the sub-coil Su occurs, a zero-cross point a3' occurs at time t2' prior to time t2 at which the zero-cross point a3 is expected to occur, but the configuration is not limited thereto. For example, even in a case where the next zero-cross point of the voltage Vsu induced to the sub-coil Su occurs before the zero-cross points of the two other phases estimated by the zero-cross point estimator 21 occur, such as before the time 2T/3 elapses, it is possible to reestimate zero-cross points of the two other phases based on the next zero-cross point. Thus, even in a case where the number of rotations of the three-phase brushless motor 1 varies extensively, it is possible to reestimate phases of the phase voltages of the two other phases (position of the rotor) in accordance with the number of rotations of the motor.

The above explanation has been given with respect to the operation in the case where the three-phase brushless motor 1 is driven as a motor (such as in a case where the three-phase brushless motor 1 is driven as a starter motor). Hereinafter, an explanation is given with respect to an example in a case where the three-phase brushless motor 1 is rotary-driven by the engine 5 and operates as a three-phase AC power generator.

### (Explanation In A Case Where Three-Phase Brushless Motor 1 Operates As Three-Phase AC Power Generator)

In a case where the three-phase brushless motor 1 is rotary-driven by the engine 5 side, the three-phase brushless motor 1 serves as a three-phase AC power generator. In the case where the three-phase brushless motor 1 serves as a three-phase AC power generator, the brushless motor control device operates so as to convert the three-phase AC output voltage output from the three-phase brushless motor 1 into the DC voltage (forward conversion), and flow charging current to the battery 4 using the DC voltage. In this case, in order to efficiently charge the battery 4, the brushless motor control device performs advanced-angle/delayed-angle control that controls the amount of the power generated by the three-phase brushless motor 1. Here, a method of controlling advanced-angle/delayed-angle control is not relevant directly to the present invention. Therefore, the advanced-angle/delayed-angle control is briefly explained hereinafter (for the details, see Patent Document 2).

The advanced-angle/delayed-angle control is control such that the conduction timings for the switching elements Q1 to Q6 constituting a rectifier unit included in the brushless motor control device are shifted to the advanced angle side or the delayed angle side with respect to the phase of the AC output voltage of the three-phase brushless motor 1, thereby controlling the amount of the power generated by the three-phase brushless motor 1. Regarding the advanced-angle/delayed-angle control, in a case where the voltage of the battery 4 is lower than a reference voltage and thereby charging of the battery is necessary, the brushless motor control device is subjected to the delayed-angle control, thereby entering the battery charged state. In a case where the voltage of the battery 4 is higher than the reference voltage and thereby charging of the battery is not necessary, the brushless motor control device is subjected to the delayed-angle control, thereby entering a state of discharging energy from the battery to the three-phase brushless motor 1.

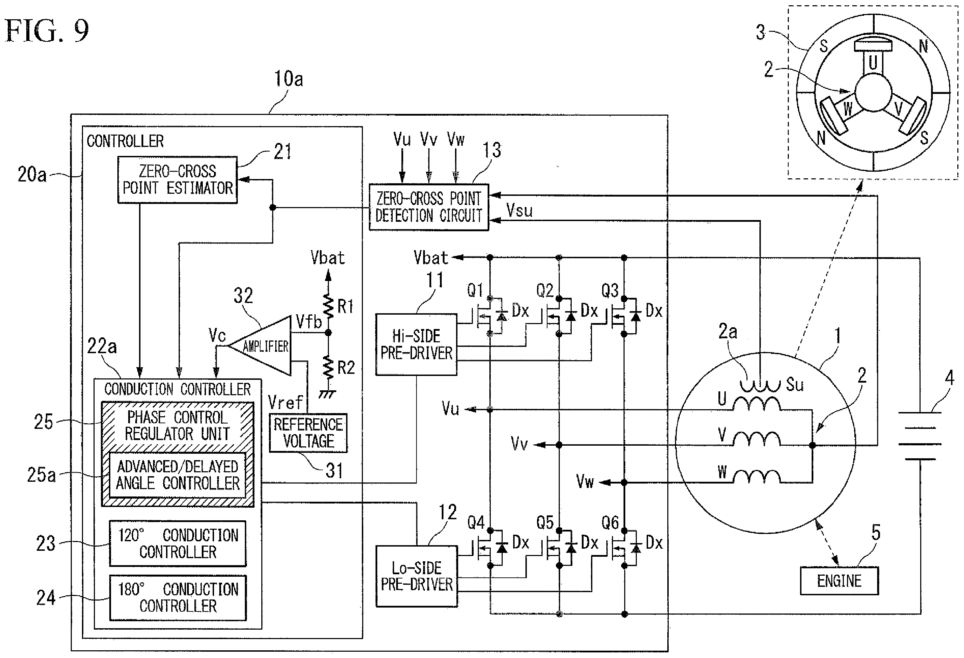

FIG. 9 is a diagram illustrating an example of a configuration in a case where the brushless motor control device is operated as a battery charging device, and illustrating an example of a configuration in a case where a brushless motor control device 10a operates as a battery charging device and a motor driving device. The brushless motor control device 10a shown in FIG. 9 differs from the brushless motor control device 10 in that a phase control regulator unit 25 (including advanced-angle/delayed-angle control unit 25a) is added in a conduction controller 22a. Additionally, a difference is in that a resistance divider circuit (circuit including resistors R1 and R2) for detecting the battery voltage Vbat, a reference voltage circuit 31 that generates the reference voltage Vref, and an difference amplifier (amplifier) 32 that compares the battery voltage Vbat and the reference voltage Vref, are newly added in the controller 20a. Other configurations are the same as those of the brushless motor control device 10 shown in FIG. 1. For this reason, the same constituent elements are appended with the same reference numerals, and overlapping explanations thereof are omitted here.

The difference amplifier 32 compares a feedback signal Vfb resulting from the actual battery voltage Vbat and a set value (target value) Vref of the battery charging voltage, amplifies a signal of the difference therebetween, and outputs the amplified signal as the amplifier output Vc. Here, regarding the amplifier output Vc, "Vc>0" when the voltage of the battery Vbat is low such that "Vfb<Vref', and "Vc<0" when the voltage of the battery Vbat is high such that "Vfb>Vref'. When "Vc>0", charging of the battery 4 (delayed angle control) is performed. When "Vc<0", discharging of the battery 4 (advanced angel control) is performed.

The advanced/delayed angle controller 25a included in the phase control regulator unit 25 receives the signal of the output Vc of the difference amplifier from the output Vc of the difference amplifier, determines the advanced/delayed angle, generates on/off signals for the switching elements Q1 to Q6 according to the advanced/delayed angle, and outputs the on/off signals to the Hi-side pre-driver circuit 11 and the Lo-side pre-driver circuit 12.

In the brushless motor control device 10a having the above configurations, the zero-cross point detection circuit 13 detects the aforementioned zero-cross points of the output voltage Vsu of any one of the three phases of the three-phase AC power generator, such as the U-phase sub-coil Su. Then, the zero-cross point estimator 21 estimates zero-cross points of the two other phases (the V-phase, the W-phase). Then, the zero-cross point estimator 21 estimates phases of the AC output voltages of the three phases of the three-phase brushless motor 1 based on the zero-cross points of the voltage (U-phase voltage) induced to the sub-coil Su and the zero-cross points of the two other phases (the V-phase, the W-phase) estimated by the zero-cross point estimator 21.

Then, based on the voltage Vc output from the difference amplifier 32, the phase control regulator unit 25 determines an advanced/delayed angle with respect to the estimated phases of the AC output voltages of the three-phase brushless motor 1. Thus, the advanced/delayed angle controller 25a controls the conduction timing for the switching elements Q1 to Q6 toward the advanced angle side or the delayed angle side.

Thus, the brushless motor control device 10a of one embodiment of the present invention can perform advanced-angle/delayed-angle control with respect to the AC output voltage of the three-phase brushless motor 1 and thereby control charging of the battery 4 without a sensor for detecting the position of the rotor being provided for each phase of the three-phase brushless motor (three-phase AC power generator) 1 and without the aforementioned triangular wave generation circuit and the voltage detection circuit being provided.

As explained above, in the brushless motor control devices 10 and 10a of one embodiment of the present invention, a sub-coil (supplemental coil for detecting the AC output voltage) is provided for one of the U-phase, the V-phase, and the W-phase of the three-phase AC power generator, and zero-cross points of the AC output voltage of the sub-coil of the one phase, thereby estimating zero-cross points (phases) of the two other phases. Thus, it is possible to control the three-phase brushless motor 1 without providing the aforementioned triangular wave generation circuit and the voltage detection circuit. For this reason, it is possible to simplify the configurations of the brushless motor control devices 10 and 10a, thereby implementing a reduction in cost.

Although an embodiment of the present invention has been explained above, the brushless motor control device of the present invention is not limited to the above shown examples. As matter of course, various modifications may be made.

### INDUSTRIAL APPLICABILITY

The embodiment of the present invention is applicable to a device for controlling a three-phase brushless motor, and a method for controlling a three-phase brushless motor. According to the brushless motor control device and the brushless motor control method, in a case where the three-phase brushless motor without a rotational position sensor is controlled by 180° conduction, the phase voltage of only one phase of the three-phase brushless motor 1 is detected, and phases of the phase voltages of the two other phases are estimated from the phase voltage of the one phase, it is possible to estimate phases of the phase voltages of the two other phases without using a triangular wave generation circuit and a voltage detection circuit.

### DESCRIPTION OF REFERENCE NUMERALS

1: three-phase brushless motor
2: stator
2a: sub-coil Su
3: rotor
4: battery
5: engine
6: sub-coil
10, 10a: brushless motor control device
11: Hi-side pre-driver circuit
12: Lo-side pre-driver circuit
13: zero-cross point detection circuit
20, 20a: controller
21: zero-cross point estimator
22, 22a: conduction controller
23: 120° conduction controller
24: 180° conduction controller
25: phase control regulator unit
25a: advanced/delayed angle controller
31: reference voltage circuit
32: difference amplifier
Q1 to Q6: switching element
Su: sub-coil

## Claims

1. A brushless motor control system comprising:
a three-phase brushless motor (1); and
a brushless motor control device (10, 10a) configured to drive control the three-phase brushless motor (1),
wherein the brushless motor control device (10, 10a) comprises:
a phase voltage detector (2a) configured to detect a phase voltage of any one phase of three phases of the three-phase brushless motor;
a zero-cross point detector (13) configured to detect zero-cross points of the phase voltage of the one phase detected by the phase voltage detector;
a zero-cross point estimator (21) configured to measure a time interval T between the zero-cross points detected by the phase voltage detector, calculate a time T/3 and a time 2T/3 based on the time interval T between the zero-cross points, and estimate zero-cross points of two other phases of the three phases; and
a conduction controller (22, 22a) configured to estimate a rotational position of a rotor (3) based on the zero-cross points of the phase voltage of the one phase and the estimated zero-cross points of the two other phases, and control conduction on each phase coil of the three-phase brushless motor,
wherein the brushless motor control system is **characterized in that** the three-phase brushless motor (1) comprises a plurality of poles each including a U-phase coil, a V-phase coil, and a W-phase coil which are on a stator (2) side,
one of the U-phase coil, the V-phase coil, and the W-phase coil, which is included in one of the poles, is removed from other coils and thereby is floated, and
the phase voltage detector (2a) is configured to detect a phase voltage of one of the three phases of the three-phase brushless motor using the floated coil.

2. The brushless motor control system according to claim 1, wherein the zero-cross point estimator (21) is configured to, in a case that after a zero-cross point of the phase voltage of the one phase occurs, before the time interval T between the zero-cross points elapses, a next zero-cross point of the phase voltage of the one phase occurs, reestimate zero-cross points of the two other phases based on the next zero-cross point.

3. The brushless motor control system according to claim 1 or 2, wherein the zero-cross point estimator (21) is configured to, in a case that a next zero-cross point of the phase voltage of the one phase occurs before the estimated zero-cross points of the two other phases occur, reestimate zero-cross points of the two phases based on the next zero-cross point.

4. The brushless motor control system according to any one of claims 1 to 3, wherein the conduction controller (22, 22a) comprises a phase control regulator (25) configured to, in a case that the three-phase brushless motor operates as a three-phase alternate-current power generator, estimate phases of phase voltages of the two other phases based on the zero-cross points of the phase voltage of the one phase and the estimated zero-cross points of the two other phases, rectify and phase control an alternate-current output voltage of each phase output from the three-phase brushless motor, and charge the battery.

5. The brushless motor control system according to any one of claims 1 to 4, wherein the three-phase brushless motor (1) is a motor configured to operate as a starter motor for staring-up an internal combustion, and operate as a three-phase alternate-current power generator to be rotary-driven by the internal combustion.

6. A brushless motor control method of drive controlling a three-phase brushless motor (1), the brushless motor control method comprising:
detecting a phase voltage of any one phase of three phases of the three-phase brushless motor;
detecting zero-cross points of the phase voltage of the one phase detected;
measuring a time interval T between the zero-cross points detected, calculating a time T/3 and a time 2T/3 based on the time interval T between the zero-cross points, and estimating zero-cross points of two other phases of the three phases; and
estimating a rotation position of a rotor based on the zero-cross points of the phase voltage of the one phase and the estimated zero-cross points of the two other phases, and controlling conduction on each phase coil of the three-phase brushless motor,
wherein the brushless motor control method is **characterized in that** the three-phase brushless motor (1) comprises a plurality of poles each including a U-phase coil, a V-phase coil, and a W-phase coil which are on a stator (2) side,
one of the U-phase coil, the V-phase coil, and the W-phase coil, which is included in one of the poles, is removed from other coils and thereby is floated, and
in detecting the phase voltage, a phase voltage of one of the three phases of the three-phase brushless motor is detected using the floated coil.

## Patentansprüche

1. Steuersystem für einen bürstenlosen Motor, umfassend:
einen bürstenlosen Dreiphasenmotor (1); und
eine Steuervorrichtung (10, 10a) für einen bürstenlosen Dreiphasenmotor, die konfiguriert ist, um eine Steuerung des bürstenlosen Dreiphasenmotors (1) anzutreiben,
wobei die Steuervorrichtung (10, 10a) für einen bürstenlosen Dreiphasenmotor Folgendes umfasst:
einen Phasenspannungsdetektor (2a), der konfiguriert ist, um eine Phasenspannung einer beliebigen Phase des bürstenlosen Dreiphasenmotors zu erfassen;
einen Nulldurchgangspunktdetektor (13), der konfiguriert ist, um Nulldurchgangspunkte der Phasenspannung der einen Phase zu erfassen, die durch den Phasenspannungsdetektor erfasst wird;
einen Nulldurchgangspunktschätzer (21), der konfiguriert ist, um ein Zeitintervall T zwischen den Nulldurchgangspunkten zu messen, die durch den Phasenspannungsdetektor erfasst werden, eine Zeit T/3 und eine Zeit 2T/3 auf Grundlage des Zeitintervalls T zwischen den Nulldurchgangspunkten zu berechnen und Nulldurchgangspunkte von zwei anderen Phasen der drei Phasen zu schätzen; und
eine Leitungssteuerung (22, 22a), die konfiguriert ist, um eine Rotationsposition eines Rotors (3) auf Grundlage der Nulldurchgangspunkte der Phasenspannung der einen Phase und der geschätzten Nulldurchgangspunkte der zwei anderen Phasen zu schätzen und eine Leitung an jeder Phasenspule des bürstenlosen Dreiphasenmotors zu steuern,
wobei des Steuersystem für einen bürstenlosen Dreiphasenmotor **dadurch gekennzeichnet ist, dass** der bürstenlose Dreiphasenmotor (1) eine Vielzahl von Polen umfasst, die jeweils eine U-Phasenspule, eine V-Phasenspule und eine W-Phasenspule beinhalten, die sich auf einer Seite eines Stators (2) befinden,
eine von der U-Phasenspule, der V-Phasenspule und der W-Phasenspule, die in einem der Pole eingeschlossen ist, von den anderen Spule entfernt und dadurch gefloatet wird und
der Phasenspannungsdetektor (2a) konfiguriert ist, um unter Verwendung der gefloateten Spule eine Phasenspannung von einer der drei Phasen des bürstenlosen Dreiphasenmotors zu erfassen.

2. Steuersystem für einen bürstenlosen Motor nach Anspruch 1, wobei der Nulldurchgangspunktschätzer konfiguriert ist, um in einem Fall, in dem, nachdem ein Nulldurchgangspunkt der Phasenspannung der einen Phase eintritt, bevor das Zeitintervall T zwischen den Nulldurchgangspunkten verstreicht, ein nächster Nulldurchgangspunkt der Phasenspannung der einen Phase eintritt, Nulldurchgangspunkte der zwei anderen Phasen auf Grundlage des nächsten Nulldurchgangspunktes neu zu schätzen.

3. Steuersystem für einen bürstenlosen Motor nach Anspruch 1 oder 2, wobei der Nulldurchgangspunktschätzer (21) konfiguriert ist, um in einem Fall, in dem ein nächster Nulldurchgangspunkt der Phasenspannung der einen Phase eintritt, bevor die geschätzten Nulldurchgangspunkte der zwei anderen Phasen eintreten, Nulldurchgangspunkte der zwei Phasen auf Grundlage des nächsten Nulldurchgangspunktes zu schätzen.

4. Steuersystem für einen bürstenlosen Motor nach einem der Ansprüche 1 bis 3, wobei die Leitungssteuerung (22, 22a) einen Phasensteuerungsregulierer (25) umfasst, der konfiguriert ist, um in einem Fall, in dem der bürstenlose Dreiphasenmotor als ein dreiphasiger Wechselstrom-Leistungsgenerator betrieben wird, Phasen von Phasenspannungen der zwei anderen Phasen auf Grundlage der Nulldurchgangspunkte der Phasenspannung der einen Phase und der geschätzten Nulldurchgangspunkte der zwei anderen Phasen zu schätzen, eine Wechselstrom-Ausgabespannung von jeder Phasenausgabe von dem bürstenlosen Dreiphasenmotor gleichzurichten und phasenzusteuern und die Batterie zu laden.

5. Steuersystem für einen bürstenlosen Motor nach einem der Ansprüche 1 bis 4, wobei der bürstenlose Dreiphasenmotor (1) ein Motor ist, der konfiguriert ist, um als ein Anlasser zum Starten einer inneren Verbrennung betrieben zu werden und als ein dreiphasiger Wechselstrom-Leistungsgenerator betrieben zu werden, um durch die innere Verbrennung rotierend angetrieben zu werden.

6. Steuerungsverfahren für einen bürstenlosen Motor zum Antriebssteuern eines bürstenlosen Dreiphasenmotors (1), wobei das Steuerungsverfahren für einen bürstenlosen Motor Folgendes umfasst:
Erfassen einer Phasenspannung einer beliebigen Phase von drei Phasen des bürstenlosen Dreiphasenmotors;
Erfassen von Nulldurchgangspunkten der Phasenspannung der einen erfassten Phase;
Messen eines Zeitintervalls T zwischen den erfassten Nulldurchgangspunkten, Berechnen einer Zeit T/3 und einer Zeit 2T/3 auf Grundlage des Zeitintervalls zwischen den Nulldurchgangspunkten und Schätzen von Nulldurchgangspunkten von zwei anderen Phasen der drei Phasen; und
Schätzen einer Rotationsposition eines Rotors auf Grundlage der Nulldurchgangspunkte der Phasenspannung der einen Phase und der geschätzten Nulldurchgangspunkte der zwei anderen Phasen und Steuern einer Leitung an jeder Phasenspule des bürstenlosen Dreiphasenmotors,
wobei das Steuerungsverfahren für einen bürstenlosen Motor **dadurch gekennzeichnet ist, dass** der bürstenlose Dreiphasenmotor (1) eine Vielzahl von Polen umfasst, die jeweils eine U-Phasenspule, eine V-Phasenspule und eine W-Phasenspule beinhalten, die sich auf einer Seite eines Stators (2) befinden,
eine von der U-Phasenspule, der V-Phasenspule und der W-Phasenspule, die in einem der Pole eingeschlossen ist, von den anderen Spule entfernt und dadurch gefloatet wird und
bei Erfassen der Phasenspannung eine Phasenspannung von einer der drei Phasen des bürstenlosen Dreiphasenmotors unter Verwendung der gefloateten Spule erfasst wird.

## Revendications

1. Système de commande de moteur sans balai comprenant :
un moteur sans balai triphasé (1) ; et
un dispositif de commande de moteur sans balai (10, 10a) configuré pour commander en entraînement le moteur sans balai triphasé (1),
dans lequel le dispositif de commande de moteur sans balai (10, 10a) comprend :
un détecteur de tension de phase (2a) configuré pour détecter une tension de phase d'une phase quelconque de trois phases du moteur sans balai triphasé ;
un détecteur de point de passage par zéro (13) configuré pour détecter des points de passage par zéro de la tension de phase de la phase détectée par le détecteur de tension de phase ;
un estimateur de point de passage par zéro (21) configuré pour mesurer un intervalle de temps T entre les points de passage par zéro détectés par le détecteur de tension de phase, calculer un temps T/3 et un temps 2T/3 d'après l'intervalle de temps T entre les points de passage par zéro, et estimer des points de passage par zéro de deux autres des trois phases ; et
un dispositif de commande de conduction (22, 22a) configuré pour estimer une position de rotation d'un rotor (3) d'après les points de passage par zéro de la tension de phase de la phase et les points de passage par zéro estimés des deux autres phases, et
commander une conduction sur chaque bobine de phase du moteur sans balai triphasé,
dans lequel le système de commande de moteur sans balai est **caractérisé en ce que** le moteur sans balai triphasé (1) comprend une pluralité de pôles comportant chacun une bobine de phase U, une bobine de phase V, et une bobine de phase W qui sont d'un côté stator (2),
l'une de la bobine de phase U, de la bobine de phase V, et de la bobine de phase W, qui est incluse dans l'un des pôles, est enlevée des autres bobines et est ainsi flottante, et
le détecteur de tension de phase (2a) est configuré pour détecter une tension de phase de l'une des trois phases du moteur sans balai triphasé à l'aide de la bobine flottante.

2. Système de commande de moteur sans balai selon la revendication 1, dans lequel l'estimateur de points de passage par zéro (21) est configuré pour, dans un cas où après qu'un point de passage par zéro de la tension de phase de la phase se produit, avant que l'intervalle de temps T entre les points de passage par zéro s'écoule, qu'un prochain point de passage par zéro de la tension de phase de la phase se produit, ré-estimer des points de passage par zéro des deux autres phases d'après le prochain point de passage par zéro.

3. Système de commande de moteur sans balai selon la revendication 1 ou 2, dans lequel l'estimateur de points de passage par zéro (21) est configuré pour, dans un cas où un prochain point de passage par zéro de la tension de phase de la phase se produit avant que les points de passage par zéro estimés des deux autres phases se produisent, ré-estimer les points de passage par zéro des deux phases d'après le prochain point de passage par zéro.

4. Système de commande de moteur sans balai selon l'une quelconque des revendications 1 à 3, dans lequel le dispositif de commande de conduction (22, 22a) comprend un régulateur de commande de phase (25) configuré pour, dans un cas où le moteur sans balai triphasé fonctionne en tant que générateur d'électricité à courant alternatif triphasé, estimer des phases de tensions de phase des deux autres phases d'après les points de passage par zéro de la tension de phase de la phase et les points de passage par zéro estimés des deux autres phases, redresser et commander en phase une tension de sortie à courant alternatif de chaque phase fournie en sortie par le moteur sans balai triphasé, et charger la batterie.

5. Système de commande de moteur sans balai selon l'une quelconque des revendications 1 à 4, dans lequel le moteur sans balai triphasé (1) est un moteur configuré pour fonctionner comme un moteur démarreur pour démarrer une combustion interne, et fonctionner comme un générateur d'électricité à courant alternatif triphasé pour être entraîné en rotation par la combustion interne.

6. Procédé de commande de moteur sans balai consistant à commander en entraînement un moteur sans balai triphasé (1), le procédé de commande de moteur sans balai comprenant :
la détection d'une tension de phase d'une phase quelconque de trois phases du moteur sans balai triphasé ;
la détection de points de passage par zéro de la tension de phase de la phase détectée ;
la mesure d'un intervalle de temps T entre les points de passage par zéro détectés, le calcul d'un temps T/3 et d'un temps 2T/3 d'après l'intervalle de temps T entre les points de passage par zéro, et l'estimation de points de passage par zéro de deux autres des trois phases ; et
l'estimation d'une position de rotation d'un rotor d'après les points de passage par zéro de la tension de phase de la phase et les points de passage par zéro estimés des deux autres phases, et la commande d'une conduction sur chaque bobine de phase du moteur sans balai triphasé,
dans lequel le procédé de commande de moteur sans balai est **caractérisé en ce que** le moteur sans balai triphasé (1) comprend une pluralité de pôles comportant chacun une bobine de phase U, une bobine de phase V, et une bobine de phase W qui sont d'un côté stator (2),
l'une de la bobine de phase U, de la bobine de phase V, et de la bobine de phase W, qui est incluse dans l'un des pôles, est enlevée des autres bobines et est ainsi flottante, et
lors de la détection de la tension de phase, une tension de phase de l'une des trois phases du moteur sans balai triphasé est détectée à l'aide de la bobine flottante.
